Europäisches Patentamt

(19) European Patent Office

Office européen des brevets

(11) Numéro de publication: **0 006 067**
A2

# (12) DEMANDE DE BREVET EUROPEEN

(21) Numéro de dépôt: 79400356.6

(22) Date de dépôt: 01.06.79

(51) Int. Cl.²: **A 23 B 5/00**

(30) Priorité: 05.06.78 FR 7816735

(43) Date de publication de la demande:
12.12.79 Bulletin 79/25

(84) Etats Contractants Désignés:
BE CH DE GB IT LU NL SE

(71) Demandeur: **FRANCE PONTE**
**St. Germain Les Arpajon**
**F-91290 Arpajon(FR)**

(72) Inventeur: **Lafon, François**
**Moulin de Fourcon Route d'Aulnaye**
**St. Germain Les Arpajon F-91290 Arpajon(FR)**

(74) Mandataire: **Weinstein, Zinovi**
**Cabinet Z. WEINSTEIN 31, Cuvillierstrasse**
**D-8000 München 80(DE)**

(54) Dispositif de conservation des oeufs et procédé de fabrication de celui-ci.

(57) La présente invention concerne le domaine de la conservation des produits alimentaires.

Le dispositif de conservation des oeufs selon l'invention est caractérisé en ce qu'il comprend une pluralité d'oeufs ayant été cuits dans leur coquille, puis épluchés, une enveloppe fermée de manière étanche à l'intérieur de laquelle sont disposés lesdits oeufs et un milieu gazeux riche en gaz carbonique et contenant éventuellement une substance modifiant ou améliorant les qualités organo-leptique de l'oeuf, cette enveloppe peut être souple, semi-rigide ou rigide; la pression de remplissage est au plus égale à environ 7 bars.

L'invention permet une durée de conservation de 3 à 5 semaines à +2°C.

EP 0 006 067 A2

-1-

## Dispositif de conservation des oeufs et procédé de fabrication de celui-ci

La présente invention concerne un dispositif permettant de conserver des oeufs d'une manière sûre et sous une forme facilement commerciable; elle vise en outre un procédé de fabrication dudit dispositif.

On a déjà proposé d'utiliser le gaz carbonique pour conserver la viande pendant quelque temps; cependant, les résultats obtenus ne se sont pas révélés suffisants; de plus, la viande ainsi conservée présente rapidement un aspect peu engageant, en raison d'un phénomène de décoloration. Dans ces conditions, on peut considérer que le spécialiste des techniques de conservation de produits alimentaires était plutôt dissuadé de maintenir les denrées en présence de gaz carbonique pour assurer leur conservation.

Cependant, la demanderesse a découvert, à la suite de nombreux essais, que, d'une manière inattendue, les oeufs préalablement cuits mais débarrassés ensuite de leur coquille, étaient susceptibles d'être conservés pendant environ 3 à 5 semaines (à une température de +2°C), en les traitant par du gaz carbonique dans certaines conditions spécifiques et en les maintenant en présence de ce gaz carbonique pendant toute la durée de conservation. Dans ces conditions, la demanderesse a mis au point un dispositif de conservation des oeufs qui est basé sur le principe de
leur traitement et de leur conservation par le gaz
carbonique.

Le dispositif de conservation des oeufs selon l'invention est caractérisé en ce qu'il comprend une
pluralité d'oeufs ayant été cuits dans leur coquille,
puis épluchés, une enveloppe fermée de manière étanche à l'intérieur de laquelle sont disposés lesdits
oeufs, et un milieu gazeux riche en gaz carbonique; ce
milieu gazeux est notamment constitué par du gaz
carbonique pur, à une pression de préférence sensiblement voisine de la pression atmosphérique, ou par un
mélange de gaz carbonique et d'un gaz inerte.

Selon un mode de réalisation de l'invention, cette
enveloppe est en un matériau susceptible d'une rétraction élevée, notamment une matière souple, telle qu'une
matière plastique souple.

Dans ce mode de réalisation de l'invention, le rapport
entre le volume total de gaz carbonique contenu dans
le dispositif précité (mesuré dans les conditions
normales de température et de pression) et le volume
des oeufs placés à l'intérieur de ce dispositif est
compris entre 2,2 et 3,5. Par l'expression "volume
total", on entend le volume de gaz carbonique contenu dans l'enveloppe, entre les oeufs et cette enveloppe, augmenté du volume du gaz carbonique ayant été
absorbé par les oeufs.

Le procédé de fabrication du dispositif précité est
caractérisé en ce qu'on fait le vide dans une enveloppe, dans laquelle on a introduit des oeufs préalablement cuits dans leur coquille et ensuite épluchés, en
ce qu'on injecte ensuite une substance gazeuse riche en gaz carbonique, notamment du gaz carbonique pur ou un mélange de gaz carbonique-gaz inerte dans ladite enveloppe, et en ce qu'on ferme ensuite cette enveloppe de manière étanche, la pression de remplissage étant supérieure à la pression atmosphérique et au plus égale à environ 7 bars.

L'intérêt de réaliser préalablement le vide dans l'enveloppe précitée et d'effectuer ensuite le remplissage de cette enveloppe sous pression est de permettre une absorption maximale du gaz carbonique par les oeufs cuits débarrassés de leur coquille et par là d'assurer les meilleures conditions de conservation.

Bien entendu, l'absorption graduelle du gaz carbonique après fermeture étanche de l'enveloppe entraîne une diminution progressive de la pression gazeuse à l'intérieur de cette dernière et son affaissement plus ou moins prononcé, de telle sorte que ladite enveloppe épouse plus ou moins la forme des oeufs lorsque cette enveloppe est en une matière souple, ce qui correspond au mode de réalisation préféré de l'invention. On peut également, conformément à l'invention, utiliser éventuellement des enveloppes en substance semi-rigide dont les propriétés de rétraction lors de la diminution de pression et de manipulation ou tenue sont cependant moins bonnes que dans le cas d'une enveloppe souple, indépendamment du fait que l'injection du gaz carbonique est un peu moins facile dans le cas d'un emballage souple. Il est aussi possible de mettre en oeuvre des enveloppes rigides, formant boîtes étanches, par exemple en métal ou en verre.

Dans le cas d'une enveloppe souple, susceptible de rétraction, il suffit que la pression gazeuse initiale ou pression de remplissage soit de l'ordre de 1,2 à

-4-

3 bars et de préférence de 1,7 à 2,3 bars.

On donne ci-dessous les caractéristiques d'absorption de gaz carbonique, dans les conditions de l'invention, pour différentes denrées alimentaires :

a) viande crue, oeufs entiers crus et oeufs durs dans leur coquille : absorption de 50 % du volume de gaz carbonique initialement injecté (mesuré dans les conditions normales),

b) oeufs durs épluchés : absorption de 78 % du gaz carbonique, dans les mêmes conditions.

Le dispositif de conservation des oeufs de l'invention présente l'avantage de ne pas provoquer de noircissement du jaune d'oeuf et de préserver l'aspect nacré du blanc d'oeuf.

Il permet aussi, par l'adjonction, dans la substance gazeuse à base de gaz carbonique, de certaines substances spécifiques en soi bien connues dans le domaine alimentaire, de modifier ou améliorer les propriétés organo-leptiques de l'oeuf, de telles substances pouvant être des arômes naturels ou artificiels ou des substances conférant tel ou tel goût ou saveur; il est à remarquer à ce sujet que ces substances, véhiculées par le gaz carbonique, peuvent pénétrer avec lui à l'intérieur des oeufs et avoir ainsi une efficacité accrue du point de vue organo-leptique.

On donne ci-après un exemple de réalisation non limitatif de l'invention.

Un dispositif de conservation d'oeufs selon cet exemple est constitué par une enveloppe en une matière souple, par exemple en polyéthylène, en polypropylène, en poly(chlorure de vinyle) en polyuréthane, etc... ayant la forme d'un sac dont les dimensions sont les suivantes : 48 cm x 17 cm.

Cette enveloppe contient 30 oeufs cuits et débarrassés de leur coquille; le remplissage gazeux de cette enveloppe est constitué par du gaz carbonique dont le volume initial, avant absorption par les oeufs, est de 3,5 litres, mesuré dans des conditions normales, ce qui correspond approximativement à un rapport volume total de gaz carbonique/volume des oeufs égal à 2,6 (le volume des oeufs étant de 1,350 litre, correspondant à un poids de 1300 grammes).

La pression de cette atmosphère gazeuse est à peu près égale à la pression atmosphérique une douzaine d'heures après la préparation du dispositif de conservation; lors de la fabrication de celui-ci, la surpression initiale de gaz carbonique par rapport à la pression atmosphérique était de l'ordre de 0,8 à 1 bar (pression d'injection de 1,8 à 2 bars).

Ce dispositif permet la conservation des oeufs pendant au moins deux semaines s'il est entreposé au frais, la durée maximale de conservation étant évidemment fonction de la température (3 à 5 semaines à +2°C); les durées maximales de conservation sont obtenues en utilisant du gaz carbonique pur sous la pression initiale maximale compatible avec les qualités de résistance de l'enveloppe et des oeufs.

Bien entendu, la présente invention n'est nullement limitée au mode d'exécution décrit qui n'a été donné qu'à titre d'exemple. En particulier, elle comprend tous les moyens constituant des équivalents techniques des moyens décrits ainsi que leurs combinaisons, si celles-ci sont exécutées suivant son esprit et mises en oeuvre dans le cadre des revendications qui suivent.

0006067

-1-

Revendications de brevet

1. Dispositif de conservation des oeufs, caractérisé en ce qu'il comprend une pluralité d'oeufs ayant été cuits dans leur coquille, puis épluchés, une enveloppe fermée de manière étanche à l'intérieur de laquelle sont disposés lesdits oeufs et un milieu gazeux riche en gaz carbonique, contenant éventuellement une substance modifiant ou améliorant les qualités organo-leptiques de l'oeuf, de telle sorte que les oeufs ainsi traités absorbent une partie du gaz carbonique et de ladite substance adjuvante éventuelle.

2. Dispositif selon la revendication 1, caractérisé en ce que le milieu gazeux précité est constitué par du gaz carbonique pur, à une pression de préférence sensiblement voisine de la pression atmosphérique.

3. Dispositif selon la revendication 1, caractérisé en ce que le milieu gazeux précité est constitué par un mélange de gaz carbonique et d'un gaz inerte.

4. Dispositif selon la revendication 1, caractérisé en ce que l'enveloppe précitée est en un matériau susceptible d'une rétraction élevée, notamment une matière souple, telle qu'une matière plastique souple.

5. Dispositif selon la revendication 4, caractérisé en ce que le rapport du volume total de gaz carbonique (mesuré dans les conditions normales) au volume des oeufs est compris entre 2,3 et 3,5

6. Dispositif selon la revendication 1, caractérisé en ce que l'enveloppe précitée est en un matériau rigide.

7. Procédé de fabrication du dispositif selon l'une des revendications 1 à 6, caractérisé en ce qu'on fait le vide dans une enveloppe, dans laquelle on a introduit des oeufs préalablement cuits dans leur coquille et épluchés, en ce qu'on injecte une substance gazeuse riche en gaz carbonique, notamment du gaz carbonique pur ou un mélange gaz carbonique-gaz inerte, dans ladite enveloppe, et en ce qu'on ferme ensuite cette enveloppe de manière étanche, la pression de remplissage étant supérieure à la pression atmosphérique et au plus égale à environ 7 bars, cette substance gazeuse contenant éventuellement un additif modifiant ou améliorant les qualités organoleptiques de l'oeuf, de telle sorte queles oeufs ainsi traités absorbent une partie du gaz carbonique et de ladite substance adjuvante éventuelle.

8. Procédé selon la revendication 7, caractérisé en ce qu'on utilise une enveloppe en une substance susceptible d'une rétraction élevée, notamment une matière souple, telle qu'une matière plastique souple.

9. Procédé selon la revendication 8, caractérisé en ce que la pression de remplissage est comprise entre 1,2 et 3 bars et de préférence entre 1,7 et 2,3 bars.

10. Procédé selon la revendication 8, caractérisé en ce que le rapport du volume total de gaz carbonique (mesuré dans les conditions normales) au volume des oeufs est de l'ordre de 2,2 à 3,5.